# EUROPÄISCHE PATENTSCHRIFT

(11) **EP 0 884 124 B1**
(45) Veröffentlichungstag und Bekanntmachung des Hinweises auf die Patenterteilung: **24.03.2004**
(21) Anmeldenummer: 98109275.2
(22) Anmeldetag: 22.05.1998
(51) Int. Cl.: B23C 5/24

(54) **Fräswerkzeug mit axialer Einstellung**
Milling cutter with axial adjustment
Fraise avec ajustement axial

(30) Priorität: 15.06.1997 DE 19725219
(43) Veröffentlichungstag der Anmeldung: 16.12.1998
(73) Patentinhaber: WALTER AG, 72072 Tübingen (DE)
(72) Erfinder: Vötsch, Wolfgang, 72414 Rangendingen (DE); Schneider, Thomas, 72145 Hirrlingen (DE); Bohnet, Siegfried, 72116 Mössingen (DE)
(74) Vertreter: Patentanwälte Rüger, Barthelt & Abel

(56) Entgegenhaltungen:
- DD-A- 209 347
- DE-A- 2 603 763
- DE-A- 3 042 050
- FR-A- 2 077 756
- FR-A- 2 094 446
- US-A- 4 456 408

## Beschreibung

Die Erfindung betrifft ein Fräswerkzeug, insbesondere ein Planfräswerkzeug, mit den Merkmalen des Oberbegriffs des Patentanspruchs 1 wie es beispielsweise aus der FR 2094446 bekannt ist.

Insbesondere Fräswerkzeuge, die mit wechselbaren Wendeschneidplatten bestückt sind, weisen einen Werkzeugkörper auf, an dem ein oder mehrere Plattensitze für entsprechende Wendeschneidplatten ausgebildet sind. Häufig ist es erforderlich, dass einzelne Wendeschneidplatten in ihrer Axialposition einstellbar sind. Diese Maßnahme dient dazu, beispielsweise eine gewünschte Anzahl von Schlichtschneiden einzustellen. Bei einem Planfräser, dessen Umfangsschneiden mit hoher Zerspanungsleistung beispielsweise als Schruppschneiden arbeiten, hat es sich beispielsweise als zweckmäßig erwiesen, für drei bis fünf Schruppschneiden lediglich eine Schlichtschneide vorzusehen, um ein gutes Schlichtbild zu erhalten. Es ist deshalb keineswegs erforderlich, alle Schneidplatten an dem Werkzeugkörper axial einstellbar zu befestigen. Es genügt, wenn eine oder wenige Schneidplatten mittels einer entsprechend verstellbaren Halterung gefasst sind.

Aus der US-PS 3 802 043, die die Merkmale des Oberbegriffs des Patentanspruchs 1 offenbart, ist ein Fräswerkzeug bekannt, das zur Aufnahme einer verstellbar zu haltenden Wendeschneidplatte eine Ausnehmung aufweist. In der Ausnehmung ist eine Kassette angeordnet, die einen Plattensitz aufweist. Die Kassette, die eine die doppelte Dicke der Wendeschneidplatte übersteigende Dicke aufweist, weist sowohl eine Anlagefläche für die Grundfläche der Wendeschneidplatte als auch seitliche Anlageflächen auf. Mit ihrer Rückenfläche liegt die Kassette an einer entsprechenden plan ausgebildeten Anlagefläche der Ausnehmung des Werkzeugkörpers an. Ein Keil presst die Wendeschneidplatte in den Plattensitz der Kassette und somit die Kassette gegen die gegenüberliegende Wand der Ausnehmung. Zur Verstellung der Kassette in Längsrichtung dient ein verdrehbarer Nocken, der mit seiner Nockenfläche an einer Stirnseite der Kassette anliegt.

Die Kassetten erfordern einen gewissen Bauraum, so dass der Zahnabstand zwischen aufeinanderfolgenden Wendeschneidplatten einen gewissen Mindestabstand nicht unterschreiten kann. Dies begrenzt die mögliche Zähnezahl und somit die Zerspanungsleistung des Fräswerkzeugs.

Aus der FR-A-2077756 ist ein Fräswerkzeug bekannt, in dessen Fräskörper Fräsplatten durch Keile festgeklemmt werden. In einer angegebenen Ausführungsform sind die Schneidplatten dreieckig, wobei sie von entsprechenden Zwischenstücken aufgenommen sind, die eine entsprechende keilförmige Ausnehmung aufweisen. Die Zwischenstücke stützen sich radial innen an einer schmalen Anlagefläche und in Axialrichtung an einem Zwischenring mit konischer Anlagefläche ab. Die Schneidplatten sind mittels Keilen am Platz festgeklemmt, wobei die Keile gegen die Spanflächen der Schneidplatten drücken. Mit ihren Grundflächen liegen die Schneidplatten an einer entsprechenden Anlagefläche des Werkzeugkörpers an.

Aus der DE-A-2603763 ist ein Fräswerkzeug bekannt, bei dem die Schneidplatten ebenfalls zwischen einem Keil und einer entsprechenden Anlagefläche des Werkzeugkörpers festgeklemmt sind. Radial nach innen liegen die Schneidplatten jeweils an einem Zwischenstück an, das mit dem Werkzeugkörper verschraubt ist.

Aus der DD 209347 ist ein Fräswerkzeug bekannt, das in Kassetten gehaltene Fräsplatten aufweist. Die Kassetten bieten der jeweiligen Schneidplatte an drei Seiten jeweils eine Anlagefläche. Mit einem entsprechenden Keil wird die Schneidplatte in der Kassette und die Kassette in dem Werkzeugkörper festgeklemmt. Der Kassette ist eine Verstelleinrichtung zugeordnet, um die Position der Schneidplatte einstellen zu können.

Ein im Wesentlichen ähnlicher Stand der Technik ist aus der DE-A-3042050 bekannt.

Insbesondere bei Fräswerkzeugen, bei denen lediglich einige der Wendeschneidplatten verstellbar zu lagern sind, tritt der durch die Kassetten verursachte vergrößerte Zahnabstand störend in Erscheinung. Sind die Plattensitze für nicht verstellbar gelagerte Wendeschneidplatten unmittelbar an dem Werkzeugkörper vorgesehen, können die Zahnabstände eher relativ gering sein. Jedoch müssen sie, um eine einheitliche Zahnteilung zu erreichen, auf den durch die wenigen Kassetten bedingten großen Zahnabstand eingestellt werden.

Ebenfalls aus der oben genannten US-PS 3 802 043 ist es bekannt, Wendeschneidplatten ohne Kassette einstellbar zu lagern. Dazu ist an dem Werkzeugkörper ein Plattensitz vorgesehen, der eine Planfläche für die Grundfläche der Wendeschneidplatte aufweist. Die Wendeschneidplatte findet ihre seitliche Anlage mit ihrer Freifläche direkt an dem oben erwähnten Nocken. Zur Befestigung ist die Wendeschneidplatte mit einem Keil gegen die Planfläche gespannt.

Bei dieser Anordnung ist die exakte Ausrichtung der Schneidplatte von der Ausrichtung des Nockens abhängig. Schon geringes Spiel um seine Drehachse oder ein geringer Winkelfehler seiner Drehachse oder abgenutzte Stellen an der Schneidplatte an der Berührungsstelle zu dem Nocken stellen die Schneidplatte unter Umständen falsch ein.

Aus der DE-PS 674 112 ist ein Messerkopf bekannt, der axial verstellbar gelagerte Messer aufweist. Diese stehen mit dem Kopf eines Exzenterbolzens in Eingriff, dessen Schaft in einer Bohrung eines Werkzeuggrundkörpers sitzt. Die Messer sind entsprechend länglich ausgebildet und bieten genügend Bauraum. Diese Maßnahme lässt sich jedoch nicht ohne weiteres auf Wendeschneidplatten übertragen.

Aus der DE 35 30 745 A1 ist ein Messerkopf bekannt, der mehrere jeweils in Kassetten gelagerte Schneidplatten aufweist. Die Kassetten sind verstellbar gehalten. Dazu weisen die Kassetten entsprechende Plattensitze auf, so dass die Schneidkräfte von der entsprechenden Schneidplatte zunächst auf die Kassette und von dieser auf den Werkzeugkörper übertragen werden. Dies erfordert eine robuste Ausbildung der Kassetten und somit einen merklichen Bauraum.

Aus der FR-2094446 ist ein Fräswerkzeug mit einem Werkzeugkörper bekannt, der Sitze zur Aufnahme von Schneidplatten und zugehörigen Einstellstücken aufweist. Diese Einstellstücke weisen etwa die gleiche Dicke wie die Schneidplatten auf und werden wie diese mit einem Keil in bzw. an dem Werkzeugkörper festgeklemmt. Die Einstellstücke liegen dabei lediglich an wenigstens einer Seitenfläche der jeweiligen Schneidplatte an, wobei sie in dem Werkzeugkörper ortsfest gehalten sind. Jedes Einstellstück ist zwischen der Schneidplatte und einer von dieser abliegenden Anlagefläche mit einem Schlitz versehen. Dieser Schlitz ist über einen Teil seiner Länge mit einem Innengewinde versehen, in das eine Einstellschraube mit kugelförmiger Stirn eingeschraubt ist. Durch mehr oder weniger starkes Festziehen der Einstellschraube kann der Schlitz etwas gespreizt werden, wodurch sich eine geringfügige Verformung des Einstellstücks ergibt. Diese Verformung wird zur Feinjustage der Schneidplatten genutzt.

Der so erreichbare Einstellbereich kann für einige Anwendungsfälle unzureichend sein.

Davon ausgehend ist es Aufgabe der Erfindung, ein Fräswerkzeug mit wenigstens einem einstellbaren Plattensitz zu schaffen, das eine geringe Zahnteilung aufweist und eine präzise Einstellung der Schneidplatte gestattet.

Diese Aufgabe wird mit einem Fräswerkzeug gelöst, das die Merkmale des Patentanspruchs 1 aufweist.

Das erfindungsgemäße Fräswerkzeug weist einen Werkzeugkörper auf, an dem die verstellbar gehaltene Schneidplatte direkt geklemmt ist. Dazu ist der Werkzeugkörper mit einer Ausnehmung und/oder einem Radialvorsprung versehen, die bzw. der eine der Grundfläche der Schneidplatte zugewandte Sitzfläche aufweist. Die Schneidplatte liegt mit ihrer Basisfläche an dieser Sitzfläche an und wird von einem Keil gegen diese gepresst. Der gegen die Spanfläche der Schneidplatte drückende Keil stützt sich an einer gegenüberliegenden Fläche ab. Anstelle des Keils können auch andere Befestigungsmittel Anwendng finden.

Zur Einstellung der gewünschten Position der Schneidplatte dient eine spezielle Kassette (Aufnahmestück), die nur mit Freiflächen der Schneidplatte, nicht aber mit deren Grundfläche in Anlage steht. Durch den direkten Kontakt zwischen der Grundfläche der Schneidplatte und der entsprechenden Anlagefläche des Werkzeugkörpers ergibt sich ein direkter umwegfreier Kraftfluss von der Schneidplatte in den Werkzeugkörper und umgekehrt. Es wird dadurch eine sehr hohe Steifigkeit und eine präzise Lagerung der Wendeschneidplatte bezüglich des Einflusses von Schneidkräften erreicht.

Die Justage der Wendeschneidplatte erfolgt mittels der Kassette auf präzise Weise. Die Kassette führt die Wendeschneidplatte durch Anlage an wenigstens zwei im Winkel zueinander stehenden Seiten- oder Freiflächen exakt und verhindert ein Kippen oder Drehen der Wendeschneidplatte beim Einstellvorgang. Die Kassette kann an einer entsprechenden Bodenfläche der Ausnehmung des Werkzeugkörpers präzise geführt werden. Entsprechend präzise ist die Führung der Wendeschneidplatte beim Einstellen. Winkelfehler, wie sie bei kassettenfreien einstellbaren Plattensitzen, vorkommen könnten, werden dadurch auf ein Minimum reduziert oder ganz ausgeschlossen.

Die spezielle Kassette ermöglicht bei entsprechender Gestaltung unterschiedliche zweckmäßige Wendeschneidplattenformen. Durch die Vermeidung eines direkten Kontakts zwischen der Wendeschneidplatte und einem Stellorgan, bspw. einem Nocken, spielt die konkrete Form der Wendeschneidplatte für deren Einstellung im Gegensatz zu bekannten einstellbaren kassettenfreien Plattensitzen keine große Rolle.

Die Berührung zwischen den Anlageflächen der Kassette und den Seitenflächen der Wendeschneidplatte kann auf kleinere Flächenbereiche beschränkt sein, die vorzugsweise an Stellen der Schneidplatte zu finden sind, die bei anderer (gewendeter) Einspannung der Schneidplatte keinem oder nur geringem Verschleiß unterliegen. Damit kann die Schneidplatte als Wendeschneidplatte ausgebildet werden, wobei in allen Einbaulagen unabhängig vom Verschleißzustand eine präzise Einstellung sichergestellt ist.

Das erfindungsgemäße Fräswerkzeug ermöglicht darüber hinaus eine enge Zahnteilung. In Umfangsrichtung wird kein Platz für die Kassette zwischen der Grundfläche der Wendeschneidplatte und der Anlagefläche des Werkzeugkörpers benötigt. Der einstellbare Plattensitz benötigt in Umfangsrichtung deshalb nicht mehr Platz als ein nicht einstellbarer Plattensitz. Die Erfindung vereinigt somit durch die spezielle Ausbildung des Plattensitzes und der Kassette die Vorzüge einer kassettenfreien Klemmung mit den Vorzügen, die eine Kassette hinsichtlich der Einstellgenauigkeit bietet.

Das Aufnahmestück weist vorzugsweise sowohl in Axialrichtung als auch in Radialrichtung jeweils wenigstens einen Anlageflächenbereich auf, der mit entsprechenden Seiten- oder Freiflächen der Schneidplatte in Anlage kommt und diese somit in ihrer Lage festlegt. Jedoch ist das Aufnahmestück im Gegensatz zu herkömmlichen Kassetten in Querrichtung oder, bezogen auf den Werkzeugkörper, im Bereich des Plattensitzes der Wendeschneidplatte in Umfangsrichtung offen. Das Aufnahmestück bestimmt somit die Axialposition der Schneidplatte einstellbar. Die Radialposition und die Drehposition der Schneidplatte sind von dem Aufnahmestück nicht einstellbar festgelegt. In Umfangsrichtung legt die Sitzfläche des Werkzeugkörpers die Position fest.

Die Drehposition ergibt sich, nachdem die Schneidplatte unverdrehbar in dem Aufnahmestück gehalten ist, durch dessen Anlage mit einer vorzugsweise planen Anlagefläche an dem Boden der Ausnehmung. Bei der Justage der Schneidplatte wird diese mittels des Aufnahmestücks axial verschoben. Dazu dient eine auf das Aufnahmestück wirkende Justiereinrichtung. Dabei gleitet die Schneidplatte mit ihrer Grundfläche an der entsprechenden Anlagefläche der Ausnehmung. Sie kann sich jedoch weder verdrehen noch verkanten, weil das Aufnahmestück mit seiner sich radial erstreckenden Anlagefläche und mit seinem sich axial erstreckenden, hinter die Schneidplatte greifenden Schenkel dessen Position festlegt.

Als Justiereinrichtung kann eine Exzenterschraube, ein Nocken, ein Keil od.dgl. Verwendung finden. Wesentlich ist dabei, dass eine ausreichende Stellkraft relativ feinfühlig aufgebracht werden kann. Um ein präzises Einstellen zu ermöglichen, ist es dabei auch erforderlich, dass das Aufnahmestück in einem Zustand gehalten werden kann, in dem es zwar durch Stellkräfte verstellt werden kann, seine Lage aber ansonsten beibehält. Dies leistet eine Halteschraube, die im Wesentlichen radial angeordnet ist und das Aufnahmestück bei einer entsprechenden Öffnung durchgreift. Die Halteschraube stützt sich über ein Federmittel an dem Aufnahmestück ab. Das Federmittel ermöglicht ein teilweises Lösen der Halteschraube unter Verminderung der Haltekraft, so dass ein definiertes Verschieben des Aufnahmestücks möglich wird.

Zur Befestigung der Schneidplatte dient vorzugsweise ein Keil, der die Schneidplatte mit ihrer Grundfläche gegen eine Seitenwand der Ausnehmung des Werkzeugkörpers presst. Der Keil arbeitet vorzugsweise in einer Richtung, die quer zu der Verstellrichtung des Aufnahmestücks orientiert ist. Dies wird bei einem Planfräser mit einem in Radialrichtung zwischen die Schneidplatte und die gegenüberliegende Wandfläche zu treibenden Keil erreicht. Das Einziehen und Halten des Keils wird durch eine geeignete, vorzugsweise radial angeordnete Schraube bewirkt.

Weitere Einzelheiten und Vorzüge der vorliegenden Erfindung ergeben sich aus Unteransprüchen, der nachfolgenden Beschreibung sowie der zugehörigen Zeichnungen.

In der Zeichnung ist ein Ausführungsbeispiel der Erfindung dargestellt. Es zeigen:
Fig. 1 ein Fräswerkzeug in einer vereinfachten perspektivischen ausschnittsweisen Darstellung,
Fig. 2 ein mit einer Schneidplatte versehenes Aufnahmestück für das Fräswerkzeug nach Fig. 1, in einer Vorderansicht,
Fig. 3 das Aufnahmestück mit der Schneidplatte nach Fig. 2, in einer Draufsicht,
Fig. 4 das Aufnahmestück nach den Fig. 2 und 3, ohne Schneidplatte, in einer Vorderansicht,
Fig. 5 das Aufnahmestück nach Fig. 2, in einer Schnittdarstellung, geschnitten entlang der Linie V-V in Fig. 2,
Fig. 6 das Aufnahmestück nach Fig. 2, in einer Schnittdarstellung, geschnitten entlang der Linie VI-VI in Fig. 2,
Fig. 7 eine Exzenterschraube zur Positionierung des Aufnahmestücks an dem aus Fig. 1 ersichtlichen Werkzeugkörper, in Seitenansicht,
Fig. 8 die Exzenterschraube nach Fig. 7, in Draufsicht,
Fig. 9 einen Spannkeil zum Befestigen der Schneidplatte an dem Werkzeugkörper, in Vorderansicht,
Fig. 10 und 11 den Spannkeil nach Fig. 9, in einer linken bzw. rechten Seitenansicht und
Fig. 12 den Spannkeil nach den Fig. 9 bis 11, in Draufsicht.

### Beschreibung

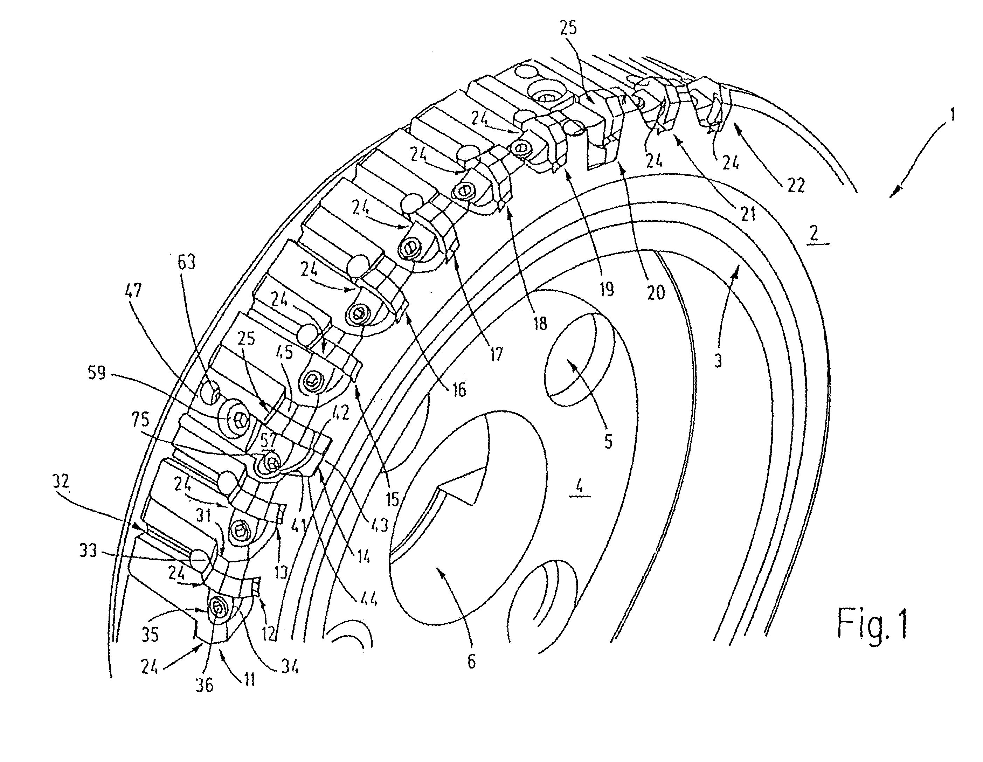

In Fig. 1 ist ein Planfräser 1 veranschaulicht, der einen etwa rotationssymmetrisch ausgebildeten Werkzeugkörper 2 mit einem ringförmigen Außenbereich 3 aufweist. An einer Seite ist der Werkzeugkörper 2 mit einer durchgehenden Wand 4 versehen, die mehrere Öffnungen 5, 6 zur Verbindung mit einer nicht weiter dargestellten Werkzeugspindel aufweist. Der ringförmige Außenbereich 3 ist an seinem gesamten Umfang mit einer Folge von Plattensitzen 11 bis 22 versehen, an denen jeweils eine Schneidplatte 24, 25 gehalten ist. Alle Schneidplatten 24, 25 sind untereinander gleich ausgebildet, wobei die Schneidplatten 24 in festgelegten Positionen und die Schneidplatten 25 in justierbaren Positionen an dem jeweiligen Plattensitz 11 bis 22 gehalten sind. Die Abstände zwischen den Plattensitzen 11 und 22 und somit zwischen den Schneidplatten 24, 25 bzw. ihren Schneidkanten sind über den gesamten Umfang des Werkzeugkörpers 2 annähernd einheitlich. Insbesondere besteht kein wesentlicher oder erzwungener Unterschied zwischen Abständen zwischen nicht verstellbaren Schneidplatten 24 und Abständen zwischen verstellbaren und nicht verstellbaren Schneidplatten 25, 24. Sollten wechselnde Abstände zweckmäßig sein, können diese jedoch vorgesehen werden.

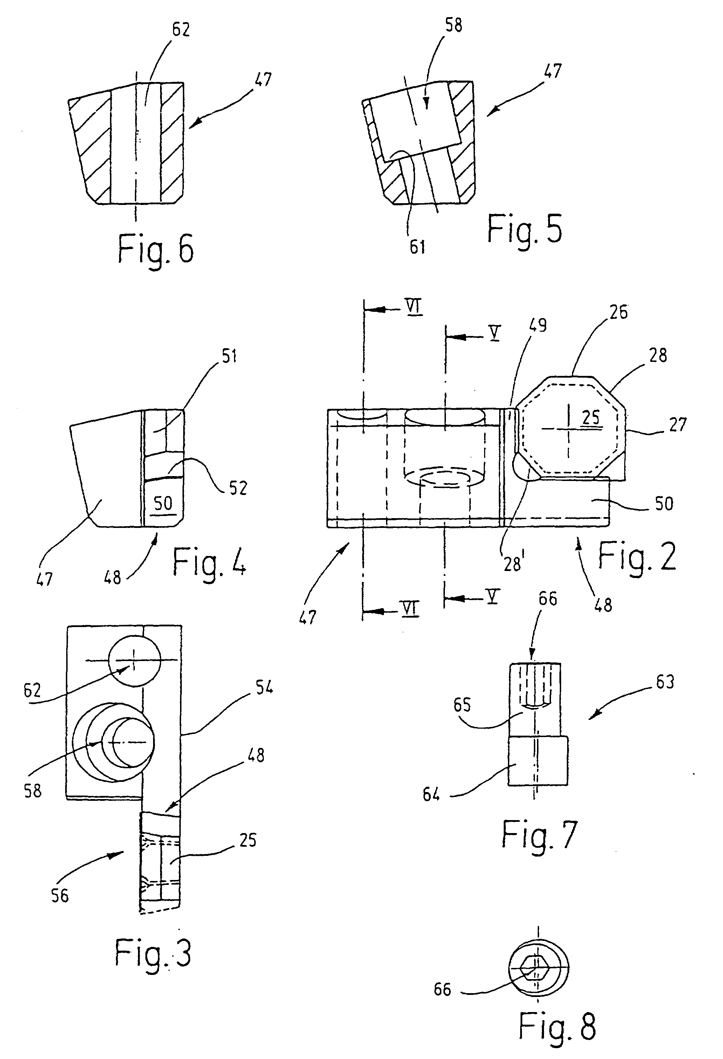

Die Schneidplatten 24, 25 weisen, wie insbesondere Fig. 2 veranschaulicht, jeweils eine Umfangsschneidkante 26 und eine Planschneidkante 27 auf. Zwischen der Umfangsschneidkante 26 und der dazu im Wesentlichen rechtwinklig orientierten Planschneidkante 27 ist eine, im vorliegenden Beispiel, ebenso lange Eckenschneidkante 28 angeordnet, so dass die Schneidplatte in Vorderansicht achteckig ist.

Die nicht verstellbaren Plattensitze 11 bis 13, 15 bis 19 sowie 21 und 22 sind untereinander gleich ausgebildet und nachfolgend anhand des Plattensitzes 12 erläutert. Der Werkzeugkörper 2 weist zur Ausbildung des betreffenden Plattensitzes 12 einen Radialvorsprung 31 auf, dessen radial außenliegende Kontur etwa mit der Kontur der Schneidplatte 24 übereinstimmt. An seiner der Schneidkante 24 zugewandten Seite weist der Radialvorsprung 31 eine plan ausgebildete Sitzfläche auf, deren Flächennormale etwa in Umfangsrichtung weist. Die genaue Position und Ausrichtung der Flächennormalen wird durch den axialen und radialen Einbauwinkel der Schneidplatte 24 bestimmt.

Vor dem Radialvorsprung 31 ist eine Nut 32 ausgebildet, wobei die Sitzfläche des Radialvorsprungs 31 absatzlos in die Seitenwand der Nut 32 übergeht. In der Nut 32 ist ein Anschlagstift 33 für die Schneidplatte 24 angeordnet. Der Boden der Nut 32 und der Anschlagstift 33 bilden Anlageflächen für die Seitenflächen der Schneidplatte 24 und bestimmen deren Position. Zum Festklemmen der Schneidplatte 24 dient ein Keil 34, der in einer entsprechenden Ausnehmung 35 mittels einer Schraube 36 gehalten ist. Der Keil 34 presst die Schneidplatte 24 gegen die Sitzfläche des Radialvorsprungs 31 und der Seitenwand und fixiert die Schneidplatte 24 somit unverrückbar.

An dem Planfräser 1 sind insgesamt vier verstellbare Plattensitze vorgesehen, von denen in Fig. 1 die Plattensitze 14 und 20 dargestellt sind. Alle verstellbaren Plattensitze sind untereinander gleich ausgebildet und werden nachfolgend anhand des Plattensitzes 14 beschrieben.

Bei dem Plattensitz 14 ist in dem Außenbereich 3 des Werkzeugkörpers 2 eine nutartige Ausnehmung 41 ausgebildet, die durch eine etwa radial orientierte Wand 42, eine den Boden definierende Wand 43 und eine schräg zu der Wand 42 verlaufende weitere Wand 44 begrenzt ist. Die Wände 42, 43, 44 sind Planflächen. Die Wand 42 bildet eine Sitzfläche und dient der Auflage und Lagerung der Schneidplatte 25 und sie erstreckt sich bis zu einem Radialvorsprung 45, der etwa mit dem Radialvorsprung 31 übereinstimmt.

In der Ausnehmung 41 ist ein im Einzelnen aus Fig. 2 ersichtliches auch als Kassette bezeichnete Aufnahmestück 47 angeordnet, dessen Querschnitt, wie beispielsweise Fig. 5 oder 6 zeigen, mit dem Querschnitt der Ausnehmung 41 übereinstimmt. Das Aufnahmestück 47 weist im Bereich der Schneidplatte 25 jedoch einen in der Breite verminderten Abschnitt 48 auf. Die Dicke des Aufnahmestücks 47 ist hier höchstens so groß wie die Dicke der Schneidplatte 25, die zwischen Spanfläche und Grundfläche zu messen ist. Der Abschnitt 48 weist hier einen sich radial erstreckenden Abschnitt 49 auf, der die Schneidplatte 25 in Axialrichtung lagert, sowie einen Abschnitt 50, der die Schneidplatte 25 in Radialrichtung lagert. Dazu sind die Abschnitte 49, 50 mit entsprechenden Anlageflächen 51, 52 versehen (Fig. 4), an denen die jeweiligen Seitenflächen der Schneidplatte 25 anliegen. Die Anlageflächen 51, 52 schließen miteinander im Wesentlichen einen rechten Winkel ein. Bei abweichender Schneidplattenform können sie auch in anderen Winkeln orientiert sein, wobei wesentlich ist, dass jede Anlagefläche 51, 52 jeweils, wie erforderlich, mit der entsprechenden Seitenfläche der verwendeten Schneidplatte in Anlage kommt.

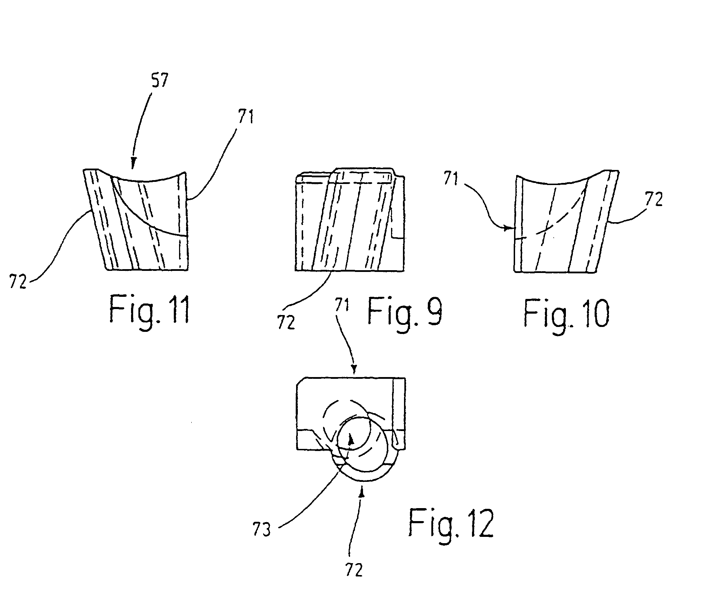

Während die Rückseite des Aufnahmestücks 47 somit eine Planfläche 54 definiert, wie aus Fig. 3 hervorgeht, ist im Bereich der Schneidplatte 25 und des Abschnitts 48 eine Ausnehmung 56 ausgebildet, die der Aufnahme eines aus den Fig. 9 bis 12 hervorgehenden Keils 57 dient. Das übrige Aufnahmestück 47 ist mit einer gestuften Befestigungsbohrung 58 versehen, die insbesondere aus Fig. 5 hervorgeht. Die Befestigungsbohrung dient der Aufnahme einer Befestigungsschraube 59 (Fig. 1), deren Kopf sich unter Zwischenlage eines Federmittels, beispielsweise eines Federrings, an einer inneren Ringschulter 61 der Befestigungsbohrung 58 abstützt.

In einem geringen Abstand zu der Befestigungsbohrung 58 ist eine weitere Bohrung 62 in dem Aufnahmestück 47 ausgebildet, die der Aufnahme des in den Fig. 7 und 8 veranschaulichten Exzenterbolzens 63 dient. Dieser sitzt mit einem zylindrischen Abschnitt 64 größeren Durchmessers in einer entsprechenden, den Boden 43 der Ausnehmung 41 durchgreifenden Bohrung und erstreckt sich mit einem exzentrisch angeordneten zylindrischen Stück 65 in die Bohrung 62. Eine sechseckige Sacköffnung 66 dient der Aufnahme eines Sechskant-Schlüssels und der gezielten Verdrehung des Exzenterbolzen 63 zum Verschieben des Aufnahmestücks 47.

Der zum Festklemmen der Schneidplatte 25 dienende Keil 57 weist eine erste, der Schneidplatte 25 zugeordnete Planfläche 71 und eine dieser gegenüberliegende und im spitzen Winkel angeordnete Druckfläche 72 auf. Um den Keil zwischen die entsprechende Anlagefläche der nutartigen Ausnehmung 41 und die Spanfläche der Schneidplatte 25 drücken zu können, weist der Keil ein schräges Durchgangsgewinde 73 auf, das zur radialen Richtung geneigt angeordnet ist. Die Neigung ist so festgelegt, dass die auf die Schneidplatte 25 ausgeübten Reibungskräfte sowohl eine auf die Anlagefläche 52 als auch eine auf die Anlagefläche 51 hin gerichtete Komponente aufweisen. Dies wird erreicht, indem der Abstand der Bohrung 73 von der Spanfläche der Schneidplatte 25 in der Nähe der Eckenschneidkante 28 größer ist als in der Nähe der gegenüberliegenden Schneidkante 28' (Fig. 2).

Die Handhabung und Einstellung der Schneidplatte 25 erfolgt an dem Planfräser 1 wie folgt:

Ausgehend von einem, wie in Fig. 1 dargestellt, montierten Planfräser 1 wird, wenn die Axialposition der Schneidplatte 25 verändert werden soll, zunächst die Befestigungsschraube 75 des Keils 57 etwas gelöst, so dass die Schneidplatte 25 nicht mehr ganz festgeklemmt ist. Es wird dann die Befestigungsschraube 59 so weit gelöst, dass das zwischen dem Schraubenkopf und dem Aufnahmestück 47 angeordnete Federmittel etwas entspannt und das Aufnahmestück 47 nur noch über die Federkraft an den Boden 43 angedrückt ist. Durch Drehen des Exzenterbolzens 63 kann nun die Axialposition des Aufnahmestücks 47 verändert werden. Die Einstellung wird dabei so vorgenommen, dass das Aufnahmestück 47 die Schneidplatte 25 axial weiter nach außen schiebt. Dies erfolgt gegen die Reibungskraft, die zwischen der Grundfläche der Schneidplatte 25 und der Wand 42 bzw. zwischen der Spanfläche der Schneidplattte 25 und dem Keil 57 wirkt. Die Schneidplatte 25 wird dadurch fest an die Anlageflächen 51, 52 angedrückt und ein Drehen der Schneidplatte aus ihrer Soll-Lage heraus wird sicher ausgeschlossen. Ist die gewünschte Position erreicht, werden die Befestigungsschrauben 75, 59 fest angezogen und die Schneidplatte 25 ist, wie gewünscht, positioniert.

Ein Fräswerkzeug 1 weist wenigstens einen Plattensitz 14 auf, der in Axialrichtung einstellbar ist. Dazu ist als Plattensitz eine in einer Nut 41 aufgenommene Kassette 47 vorgesehen, die jedoch keine Auflagefläche für die Grundfläche der Schneidplatte 25 aufweist. Die Schneidplatte 25 liegt damit an einer Seitenwand 42 der Nut 41 auf. Der Plattensitz 14 wird dadurch kombiniert durch eine Planfläche des Werkzeugkörpers 2 und durch Anlageflächen 51, 52 der Kassette 47 gebildet. Es wird dadurch ein besonders geringer Bauraum (enge Zahnteilung) und eine steife Halterung der Schneidplatte 25 erreicht.

## Patentansprüche

1. Fräswerkzeug (1), insbesondere Planfräswerkzeug,
mit einem Werkzeugkörper (2), der mehrere Plattensitze (11 bis 22) aufweist, bei denen Schneidplatten (24, 25) mit Grundfläche, Frei- oder Seitenflächen und einer Spanfläche gehalten sind, wobei wenigstens eine der Schneidplatten (25) an einem der Plattensitze (11 bis 22) der durch mehrere Flächen (42, 51, 52) begrenzt ist, in einer Einstellrichtung mittels einer Justiereinrichtung (63) justierbar gehalten ist,
mit einem Aufnahmestück (47), das an dem Werkzeugkörper (2) zur justierbaren Lagerung der Schneidplatte (25) in Einstellrichtung verstellbar gehalten ist und das Anlagemittel (51, 52) für wenigstens zwei Seitenflächen der Schneidplatte (25) aufweist,
wobei die Schneidplatte (25) mit ihrer Grundfläche unmittelbar an einer Sitzfläche (42) des Werkzeugkörpers (2) aufliegt, und
mit einem Klemmmittel (57), das sich an dem Werkzeugkörper (2) abstützt und mit einer Fläche (71) gegen die Spanfläche der Schneidplatte (25) drückt **dadurch gekennzeichnet, daß** des Aufnahmestück (47) zur Justierung der Schneidplatte in der Einstellrichtung verschohen wird.

2. Fräswerkzeug nach Anspruch 1, **dadurch gekennzeichnet, dass** das Aufnahmestück (47) in einer Ausnehmung (41) des Werkzeugkörpers (2) angeordnet ist, deren plan ausgebildete Seitenwand (42) die Sitzfläche (42) für die Grundfläche der Schneidplatte (25) ist.

3. Fräswerkzeug nach Anspruch 1, **dadurch gekennzeichnet, dass** das Aufnahmestück (47) einen in Radialrichtung mit der Schneidplatte (25) in Anlage stehenden Anlageflächenbereich (52) sowie einen in Axialrichtung mit der Schneidplatte (25) in Anlage stehenden Anlageflächenbereich (51) aufweist.

4. Fräswerkzeug nach Anspruch 1, **dadurch gekennzeichnet, dass** das Aufnahmestück (47) keine in Umfangsrichtung mit der Schneidplatte (25) in Anlage zu bringende Flächen aufweist.

5. Fräswerkzeug nach Anspruch 1, **dadurch gekennzeichnet, dass** die Schneidplatte (25) von dem Aufnahmestück (47) hinsichtlich in Umfangsrichtung wirkender Kräfte entkoppelt ist.

6. Fräswerkzeug nach Anspruch 1, **dadurch gekennzeichnet, dass** das Aufnahmestück (47) die Einstellung der Schneidplatte (25) insbesondere hinsichtlich einer Drehung um die Umfangsrichtung des Werkzeugkörpers (2) festlegt.

7. Fräswerkzeug nach Anspruch 2, **dadurch gekennzeichnet, dass** das Aufnahmestück (47) eine Planfläche aufweist, die mit einer Bodenfläche (43) der Ausnehmung (41) des Werkzeugkörpers (2) in Anlage steht.

8. Fräswerkzeug nach Anspruch 1, **dadurch gekennzeichnet, dass** das Aufnahmestück (47) von einer Halteschraube (59) gehalten ist, die das Aufnahmestück (47) mit einem eine Einstellbewegung zulassendem Spiel durchgreift.

9. Fräswerkzeug nach Anspruch 8, **dadurch gekennzeichnet, dass** die Halteschraube (59) einen Kopf aufweist, an dem ein Federelement abgestützt ist, das sich anderenends an dem Aufnahmestück (47) abstützt.

10. Fräswerkzeug nach Anspruch 1, **dadurch gekennzeichnet, dass** das Aufnahmestück (47) mittels der Justiereinrichtung (63) in Längsrichtung verstellbar ist.

11. Fräswerkzeug nach Anspruch 10, **dadurch gekennzeichnet, dass** die Justiereinrichtung (63) ein Exzenterbolzen ist.

12. Fräswerkzeug nach Anspruch 10, **dadurch gekennzeichnet, dass** die Justiereinrichtung (63) eine Nockeneinrichtung ist.

13. Fräswerkzeug nach Anspruch 11, **dadurch gekennzeichnet, dass** der Exzenterbolzen (63) mit einem exzentrisch angeordneten Abschnitt in einer Öffnung (62) des Aufnahmestücks (47) angeordnet ist.

14. Fräswerkzeug nach Anspruch 1, **dadurch gekennzeichnet, dass** das Klemmmittel (57) ein Keil ist, der mit einer Fläche (71) an der Spanfläche der Schneidplatte (25) anliegt und der mit einer gegenüberliegenden Fläche (72) an einer Fläche der Ausnehmung (41) anliegt.

15. Fräswerkzeug nach Anspruch 14, **dadurch gekennzeichnet, dass** die Fläche (42) des Werkzeugkörpers (2), an dem die Grundfläche der Schneidplatte (25) anliegt, und die gegenüberligende Fläche des Werkzeugkörpers, an dem sich der Keil (57) abstützt , miteinenander einen spitzen Winkel einschließen.

16. Fräswerkzeug nach Anspruch 15, **dadurch gekennzeichnet, dass** der Keil (57) mittels einer radial angeordneten Schraube (75) gehalten ist.

## Claims

1. Milling cutter (1), in particular surface milling cutter,
with a cutter body (2), which has a plurality of blade seats (11 to 22), at which cutting blades (24, 25) with base flank, relief or side flanks and a rake face are held, wherein at one of the blade seats (11 to 22) bordered by several faces (42, 51, 52), at least one of the cutting blades (25) is adjustably held in an alignment direction by means of an adjusting means (63),
with a receiving segment (47), which is held on the cutter body (2) to be adjustable in the alignment direction for adjustable seating of the cutting blade (25), and which has abutment means (51, 52) for at least two side flanks of the cutting blade (25),
wherein the cutting blade (25) lies directly on a seat (42) of the cutter body (2) with its base flank, and
with a clamping means (57), which is supported on the cutter body (2) and with one face (71) presses against the rake face of the cutting blade (25),
**characterised in that** the receiving segment (47) is displaced for adjustment of the cutting blade in the alignment direction.

2. Milling cutter according to Claim 1, **characterised in that** the receiving segment (47) is disposed in a recess (41) of the cutter body (2), the plane side wall (42) of said recess being the seat (42) for the base flank of the cutting blade (25).

3. Milling cutter according to Claim 1, **characterised in that** the receiving segment (47) has an abutment face area (52) abutting with the cutting blade (25) in the radial direction and also an abutment face area (51) abutting with the cutting plate (25) in axial direction.

4. Milling cutter according to Claim 1, **characterised in that** the receiving segment (47) does not have any faces to be brought into abutment with the cutting blade (25) in the peripheral direction.

5. Milling cutter according to Claim 1, **characterised in that** the cutting blade (25) is uncoupled from the receiving segment (47) in respect of forces acting in the peripheral direction.

6. Milling cutter according to Claim 1, **characterised in that** the receiving segment (47) determines the alignment of the cutting blade (25) in particular in respect of a rotation around the peripheral direction of the cutter body (2).

7. Milling cutter according to Claim 2, **characterised in that** the receiving segment (47) has an end face, which abuts with a bottom face (43) of the recess (41) of the cutter body (2).

8. Milling cutter according to Claim 1, **characterised in that** the receiving segment (47) is held by a retaining screw (59), which engages through the receiving segment (47) with a play that permits an alignment movement.

9. Milling cutter according to Claim 8, **characterised in that** the retaining screw (59) has a head, on which a spring element is supported, which is supported on the receiving segment (47) at its other end.

10. Milling cutter according to Claim 1, **characterised in that** the receiving segment (47) is adjustable in the longitudinal direction by means of the adjusting means (63).

11. Milling cutter according to Claim 10, **characterised in that** the adjusting means (63) is an eccentric bolt.

12. Milling cutter according to Claim 10, **characterised in that** the adjusting means (63) is a cam means.

13. Milling cutter according to Claim 11, **characterised in that** the eccentric bolt (63) is disposed with one eccentrically arranged section in an opening (62) of the receiving segment (47).

14. Milling cutter according to Claim 1, **characterised in that** the clamping means (57) is a wedge, which with one face (71) abuts against the rake face of the cutting blade (25) and which with an opposing face (72) abuts against a face of the recess (41).

15. Milling cutter according to Claim 14, **characterised in that** the face (42) of the cutter body (2), against which the base flank of the cutting blade (25) abuts, and the opposite face of the cutter body, on which the wedge (57) is supported, together enclose an acute angle.

16. Milling cutter according to Claim 15, **characterised in that** the wedge (57) is held by means of a radially disposed screw (75).

## Revendications

1. Fraise (1), notamment fraise à surfacer,
avec un corps d'outil (2) qui comporte plusieurs logements de plaquettes (11 à 22), dans lesquels des plaquettes de coupe (24, 25) présentant une face de base, des faces de dépouille ou latérales et une face de coupe sont tenues, au moins une des plaquettes de coupe (25) étant tenue avec possibilité d'ajustage dans une direction à l'aide d'un dispositif d'ajustage (63) dans l'un des logements (11 à 22) délimité par plusieurs surfaces (42, 51, 52),
avec un porte-plaquette (47) qui est fixé de manière réglable au corps d'outil (2), pour le montage de la plaquette de coupe (25) avec possibilité d'ajustage dans la direction de réglage et qui comporte des moyens d'appui (51, 52) pour au moins deux faces latérales de la plaquette de coupe (25), la plaquette de coupe (25) reposant avec sa face de base directement sur une surface d'appui (42) du corps d'outil (2),
avec un moyen de bridage (57) qui prend appui sur le corps d'outil (2) et pousse avec une surface (71) contre la face de coupe de la plaquette de coupe (25),
**caractérisée par le fait que** le porte-plaquette (47), pour l'ajustage de la plaquette de coupe (25), peut être déplacé dans la direction de réglage.

2. Fraise selon la revendication 1, **caractérisée par le fait que** le porte-plaquette (47) est disposé dans un évidement (41) du corps d'outil (2), dont la paroi latérale (42) plane est la surface d'appui (42) pour la face de base de la plaquette de coupe (25).

3. Fraise selon la revendication 1, **caractérisée par le fait que** le porte-plaquette (47) comporte une portion de surface d'appui (52) en contact avec la plaquette de coupe (25) dans la direction radiale et une portion de surface d'appui (51) en contact avec la plaquette de coupe (25) dans la direction axiale.

4. Fraise selon la revendication 1, **caractérisée par le fait que** le porte-plaquette (47) ne comporte aucune surface à amener en contact avec la plaquette de coupe (25) dans la direction périphérique.

5. Fraise selon la revendication 1, **caractérisée par le fait que** la plaquette de coupe (25) est découplée du porte-plaquette (47) en ce qui concerne les forces agissant dans la direction périphérique.

6. Fraise selon la revendication 1, **caractérisée par le fait que** le porte-plaquette (47) fixe le réglage de la plaquette de coupe (25) notamment en ce qui concerne une rotation autour de la direction périphérique du corps d'outil (2).

7. Fraise selon la revendication 2, **caractérisée par le fait que** le porte-plaquette (47) présente une face plane qui est en contact avec une surface de fond (43) de l'évidement (41) du corps d'outil (2).

8. Fraise selon la revendication 1, **caractérisée par le fait que** le porte-plaquette (47) est tenu par une vis de fixation (59) qui traverse le porte-plaquette (47) avec un jeu permettant un déplacement de réglage.

9. Fraise selon la revendication 8, **caractérisée par le fait que** la vis de fixation (59) comporte une tête sur laquelle prend appui un élément élastique, dont l'autre extrémité prend appui sur le porte-plaquette (47).

10. Fraise selon la revendication 1, **caractérisée par le fait que** le porte-plaquette (47) peut être déplacé dans la direction longitudinale à l'aide du dispositif d'ajustage (63).

11. Fraise selon la revendication 10, **caractérisée par le fait que** le dispositif d'ajustage (63) est un axe à excentrique.

12. Fraise selon la revendication 10, **caractérisée par le fait que** le dispositif d'ajustage (63) est un dispositif à came.

13. Fraise selon la revendication 11, **caractérisée par le fait que** l'axe à excentrique (63) est monté avec une partie excentrée dans une ouverture (62) du porte-plaquette (47).

14. Fraise selon la revendication 1, **caractérisée par le fait que** le moyen de bridagc (57) est un coin qui avec une surface (71) est en appui sur la face de coupe de la plaquette de coupe (25) et avec une surface (72) opposée est en appui sur une surface de l'évidement (41).

15. Fraise selon la revendication 14, **caractérisée par le fait que** la surface (42) du corps d'outil (2), sur laquelle la face de base de la plaquette de coupe (25) est en appui, et la surface opposée du corps d'outil, sur laquelle le coin (57) prend appui, forment un angle aigu entre elles.

16. Fraise selon la revendication 15, **caractérisée par le fait que** le un coin (57) est tenu par une vis (75) disposée radialement.
